# EUROPEAN PATENT SPECIFICATION

(11) **EP 0 406 180 B1**
(45) Date of publication and mention of the grant of the patent: **31.08.1994**
(21) Application number: 90830270.6
(22) Date of filing: 14.06.1990
(51) Int. Cl.: C03B 11/00, C03B 11/02, C03B 11/06, C03B 11/12, C03B 11/16, C03B 40/00

(54) **Apparatus and process for the manufacture of a mirror of prismatic shape to be used as a rearview mirror in a motor vehicle**
Verfahren und Vorrichtung zum Herstellen eines prismatisch geformten Spiegels zum Benutzen in einem Motorfahrzeug als Rückspiegel
Procédé et appareil pour la fabrication d'un miroir de forme prismatique pour être utilisé comme rétroviseur dans un véhicule motorisé

(30) Priority: 16.06.1989 IT 4809489
(43) Date of publication of application: 02.01.1991
(73) Proprietor: SOCIETA' ITALIANA VETRO- SIV-SpA, 66050 San Salvo (Chieti) (IT)
(72) Inventor: Bracco, Pier Luigi, I-15060 Stazzano AL (IT)
(74) Representative: Bazzichelli, Alfredo

(56) References cited:
- DE-C- 97 850
- FR-A- 824 707
- FR-A- 1 246 751
- FR-A- 2 415 607
- GB-A- 1 027 903
- GB-A- 1 126 917
- US-A- 2 716 909
- US-A- 3 244 497
- US-A- 3 278 285
- US-A- 4 915 720

## Description

The present invention refers to a process for the manufacturing of a mirror of prismatic shape, particularly to be used as a rearview mirror in a motorvehicle, and to an apparatus for carrying out such a process.

Mirrors are used in the automobile industry as rearview mirrors intended to be mounted inside the inner compartment of a motorvehicle (inner rearview mirrors), or on the outer surface of the body (outer rearview mirrors).

The inner rearview mirrors are preferably of prismatic shape and such shape is obtained according to an already known manufacturing method, by grinding the glass surface uncoated by the reflecting coat, so as to obtain a prism with a surface inclined at an angle of 2 to 5 degrees relative to the vertical plane.

Said prismatic mirrors, if mounted on appropriate supports, are suited to protect the driver from any eventual glaring deriving from intensely reflected light. In fact, in this case, by manipulating the appropriate support, the conductor will be able to receive the reflected light from the outer surface of the glass, which is generally equal to 4 % of the incident light, thus drastically reducing the dazzle phenomenon.

FR-A-1.246.751 describes a process for the manufacture of small glass plates particularly to be used for mosaicking, by moulding the plates in moulds pushed upwards by pressure pistons against a fixed cover. The moulds are transported by a table rotatable step by step.

US-A-3,244,497 describes a mould for forming lens blanks supported by point contact on the supporting structure for the mould. A plunger operates within a sleeve to engage the lower portion of the mould to form the lens blank. Both the upper and lower portions of the mould are temperature regulated so that the blanks are moulded under the same physical and thermal conditions.

However drawbacks exist relative to the manufacturing method of prismatic mirrors described above, due to a high production cost, resulting from a long and delicate grinding operation, and, otherwise, the above mentioned operation creates dust in suspension, which is particularly damaging to human health.

Furthermore, a reduction of the mechanical strength of the mirror occurs, in that the grinding operation creates potential breakage faults on the worked surface.

Object of the present invention is to overcome the drawbacks mentioned above.

The invention solves the problems of high cost of manufacture, pollution and of the reduced mechanical strength, using, to obtain the prismatic form, a process of manufacture in itself known in the art, which, when appropriately applied in the field of production of rearview prismatic mirrors, allows to achieve surprisingly advantageous results.

In fact, whilst the known production method involves firstly the manufature of the mirror, the application of the reflecting coating on the sheet of glass, and then imparting the prismatic shape to the glass through surface grinding work, the subject process of the present invention firstly imparts the glass its prism shape and later provides it with a reflecting coating. This result is obtained thanks to the substitution of the grinding operation by a heat moulding operation of melted glass, cast in forming moulds.

The advantages obtained by the present invention consist essentially in the fact that the product is manufactured in a shorter time than before and also with a greater accuracy, as in the case of the moulding, the planarity of the surface can tolerate an allowance within ± 0.2 mm, whilst in the case of the grinding, it tolerated an allowance of ± 0.5 mm; what is also significant in the case of the moulding, is the reduction of environmental pollution, as the glass dust residues resulting from the grinding no longer exist.

Naturally, the inconvenience of the reduced mechanical strength is also lost, since grinding is no longer carried out. A further advantage lies in the fact that the moulding process can be carried out by a highly automatized operation, reducing production costs even further.

Therefore, the object of the present invention is a process for the manufacture of a mirror of prismatic shape, particularly to be used as a rearview mirror in a motorvehicle comprising the operations of melting an amount of glass for forming a mirror, casting said glass into a mould, forming the glass, annealing the glass and applying to the glass a reflecting coating, characterized in that
said glass is cast into a female mould having an open cavity and said forming operation comprises two pressing steps carried out in succession one after the other, in each of which a male mould having a perfectly plane pressing surface is pressed onto the glass cast in said open cavity, so as to reduce the risks of upward curvature of the glass pressed in the first of said steps.

Another object of the present invention is an apparatus for the manufacture of a mirror of prismatic shape, particularly to be used as a rearview mirror in a motorvehicle comprising a hopper for the collection of a vitrifiable mixture, a melting furnace to melt said mixture, a rotatable platform to transport the moulds receiving said molten mixture through successive stations, characterized in that
said moulds transported by the platform are female moulds having an open cavity, and said forming station comprises: a pair of male moulds having a perfectly plane pressing surface to be engaged successively with said open cavity of said female mould to press the vitrifiable mixture therein; a pair of pistons to lower said male moulds toward said female mould; a device provided with arms supporting said pistons; and hydraulic cylinders placed underneath said rotatable platform in correspondence with the axes of said pistons to counteract the pressure of said pistons on the rotatable platform.

The invention is described in greater detail below, with the aid of drawings which represent an example of its embodiment.

Figure 1 represents a general top view of the apparatus embodied according to the present invention.

Figure 2 represents a top view of the device for carrying out the moulding operation according to the present invention.

Figure 3 represents a vertical cross section of the device in figure 2.

Figure 4 represents a vertical cross sectional view of the forming mould.

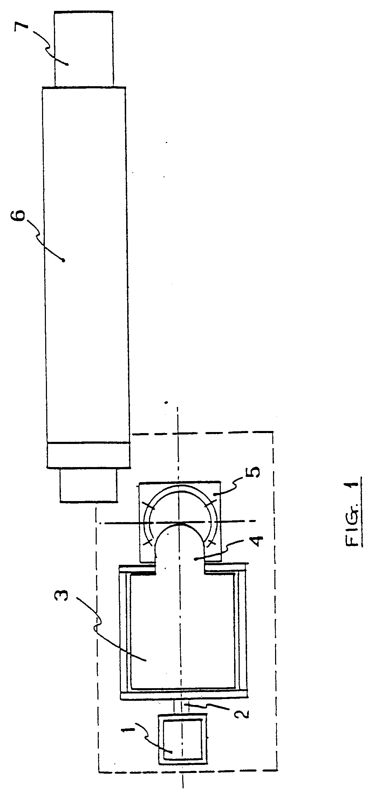

Referring to figure 1, the hopper 1 is connected to the furnace 3 by a feed screw 2. At the extreme end opposite the hopper 1, the furnace 3 terminates with an outlet 4, shaped as a semicircle, having at its base a vertical casting conduit, not shown in the drawings.

The casting conduit is arranged over and perpendicularly to the plane of the device 5 which supports the forming moulds.

An annealing furnace 6 is placed below the moulding device 5 and is fed by an automatic charging equipment, not shown in the drawings. A conveyor 7, placed at the tail end of the furnace 6, sees to transporting away the pieces after annealment.

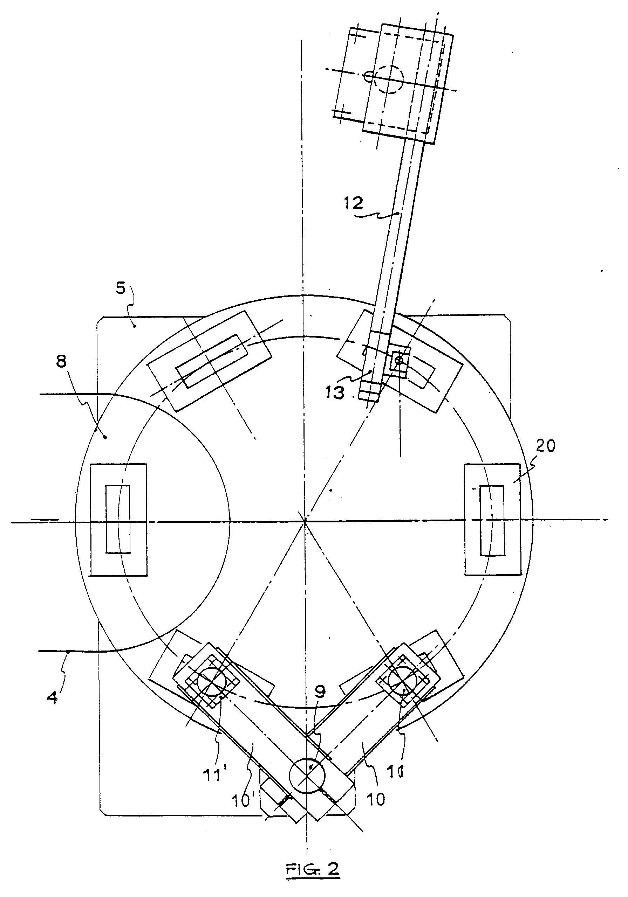

Referring to figure 2, the device 5 containing the forming moulds is formed by a rotatable plane 8 on whose surface rest the forming moulds. A column 9, laterally positioned relative to the device 5, supports two arms 10 and 10′ on which are applied respectively two pistons 11 and 11′ necessary for pressing the melted glass. An arm 12, through a trolley 13 having suction cups not shown in the drawings and which slides horizontally along the same arm 12, transfers the melted glass from the device 5 to the annealing furnace 6.

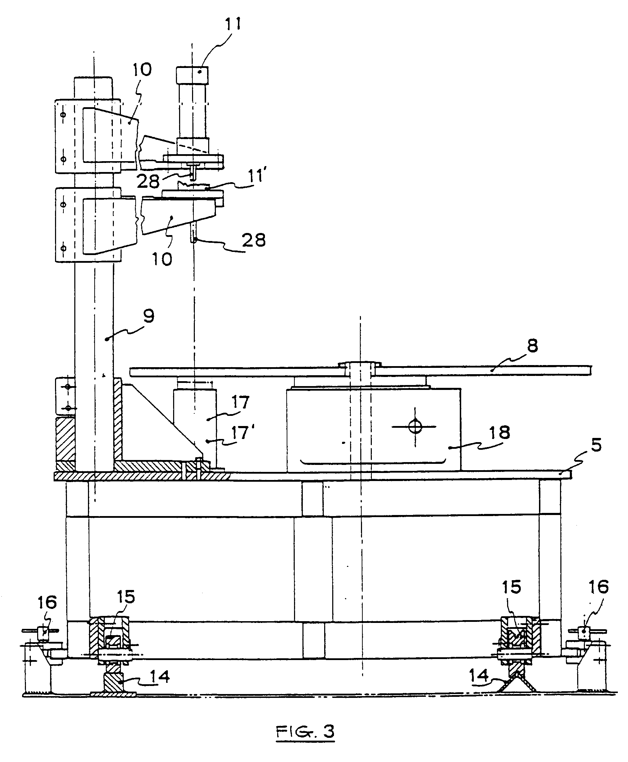

In figure 3 there is represented the device 5 with the rotatable platform 8 on which are rested the forming moulds. A self-breaking speed reducer 18 imparts the rotatory movement to the rotatable platform 8. The pressing apparatus is free to move on rails 14 by wheels 15 and is blocked in the appropriately chosen working position, with pins 16.

Two hydraulic cylinders 17 and 17′ are placed underneath the rotatable plane 8 in correspondance to the axis of the pistons 11 and 11′ with the purpose of equilibrating the pressure of the same pistons 11 and 11′ in the pressing step, to avoid deformation of the rotatable plane 8.

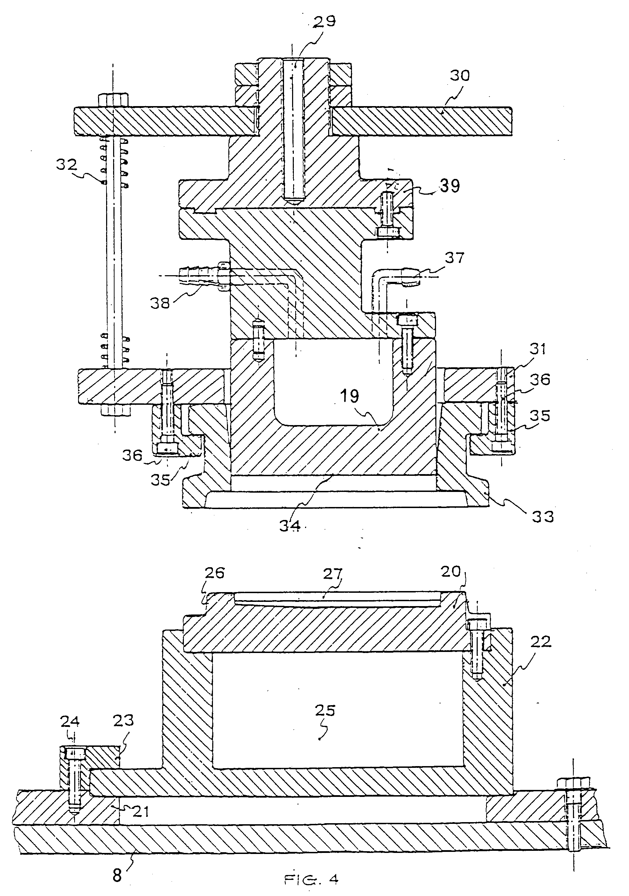

Referring to figure 4, the mould for the manufacture of the prismatic glass is formed by a male mould 19 and by a female mould 20 preferably manufactured in stainless steel.

The female mould 20 rests on the rotatable platform 8 by an interplaced rotatable ring 21, on which in turn rests the support structure 22. The support 22 is blocked on the ring 21 by a mechanical stop 23 which blocks the support in the desired position by the screw 24. The cavity 25 of the support 22 is used for housing a heat source, not shown in the drawings, having the purpose of maintaining the temperature of the mould 20 within appropriate values, so as not to cool the melted glass too rapidly, which has just been cast in the mold. Chamfers 26, present on the edges of the mould 20, have the purpose of facilitating the centering of the male mould on the female mould as well as allowing the escape of melt gases which would otherwise be entrapped in the glass. The cavity 27, appropriately shaped, receives the cast glass. The male mould is supported by the rod 28 of the piston 11 which is housed in the screw threaded cavity 29.

Plates 30 and 31 are held apart from each other by return springs 32 and are supported on a support structure 39. The male mould 19 is received in a guiding ring 33 supported by the plate 31 and it contains a perfectly plane horizontal surface 34. Mechanical means 35 allow, by means of screws 36, the most appropriate positioning of the ring 33 in correspondance with mould 20.

A water intake fitting 37 allows the inflow of cooling water in the support structure 39 which is appropriately hollow inside and an air intake fitting 38 allows the inflow of air having the purpose of guaranteeing the uniform distribution of the water inside the structure 39 and therefore the uniform cooling of the compression surface 34.

The operation of the apparatus described above is the following: the vitrifiable mixture, collected in the hopper 1, feeds the screw 2 and then the muffle furnace 3.

The glass, brought to its melting temperature, is cast through the vertical conduit into the cavity 27 of the underlying mould; when there is a suitable quantity of melted glass deposited in the mould, a cutter cuts the glass tail. The casting speed of the glass depends on its viscosity, and this parameter is fixed experimentally to find the opportune casting speed which is compatible with the moulding time, so as to prevent an excessive cooling of the glass melt.

To allow greater uniformity in the distribution of the melted glass in the cavity 27, the rotatable plane 8 rotates slowly during the casting operation.

On completion of the filling of the mould, after the cutting of the tail, the hydraulic piston 11 pushes, by means of the rod 28, the male mould 19 downwardly and the ring 33 engages the female mould 20. The pressing surface 34 presses the melted glass mass and forms it according to the shape of the cavity 27. To prevent or reduce the possibility that the glass, after its release from the mould, may curve upwardly due to the temperature difference, a second pressing operation is carried out immediately afterwards having the same characteristics of the first pressing step. On completion of such second pressing step, continuing in its rotatory movement, the rotating plane 8 brings the mould 20 to a station in which the quality of the pressed product is controlled and, if the result is suitable, it will be lifted by the arm 13 and brought to the annealing furnace 6.

Meanwhile the rotatable platform 8, continuing its rotation, brings the empty mould to a following station in which the inner walls of the mould itself are cleaned of eventual residues and coated with a releasing agent, suited to facilitate the release of the glass. Following in its trajectory, the mould is placed once again under the cast conduit to repeat the cycle.

In synthesis, the rotatable platform performs a rotation of 360 degrees undergoing the following steps: casting of the glass in the mould, first pressing, second pressing, quality control, demoulding the glass, cleaning of the mould and application of the release agent, and casting.

After annealing, the glass will be subjected, on one of its two surfaces, to the application of a reflecting coating to obtain the mirror. It may be necessary, before this stage, to carry out a quick trimming operation of the edges, on which some amount of glass may be left due to seapage from the closed mould during the pressing steps.

## Claims

1. Process for the manufacture of a mirror of prismatic shape, particularly to be used as a rearview mirror in a motorvehicle comprising the operations of melting an amount of glass for forming a mirror, casting said glass into a mould (20), forming the glass, annealing the glass and applying to the glass a reflecting coating, characterized in that
said glass is cast into a female mould (20) having an open cavity (27) and said forming operation comprises two pressing steps carried out in succession one after the other, in each of which a male mould (19) having a perfectly plane pressing surface (34) is pressed onto the glass cast in said open cavity (27), so as to reduce the risks of upward curvature of the glass pressed in the first of said steps.

2. A process as claimed in claim 1, in which said female mould (20) with the glass cast in said open cavity (27) is transported from a first station to a second station to perform in said stations said successive steps of the forming operation.

3. A process as claimed in claim 1 or 2, in which before casting, the forming mould (20) is treated on its inner surface with an appropriate release agent suited to facilitate the release operation of the pressed glass from the inner surfaces of the mould.

4. Apparatus for the manufacture of a mirror of prismatic shape, particularly to be used as a rearview mirror in a motorvehicle comprising a hopper (1) for the collection of a vitrifiable mixture, a melting furnace (3) to melt said mixture, a rotatable platform (8) to transport the moulds (20) receiving said molten mixture through successive stations, characterized in that
said moulds (20) transported by the platform (8) are female moulds having an open cavity (27), and said forming station comprises: a pair of male moulds (19) having a perfectly plane pressing surface (34) to be engaged successively with said open cavity of said female mould (20) to press the vitrifiable mixture therein; a pair of pistons (11, 11') to lower said male moulds (19) toward said female mould (20); a device (5) provided with arms (10, 10') supporting said pistons (11, 11'); and hydraulic cylinders (17, 17') placed underneath said rotatable platform (8) in correspondence with the axes of said pistons (11, 11') to counteract the pressure of said pistons (11, 11') on the rotatable platform (8).

5. Apparatus as claimed in claim 4 in which said male mould (19) is carried by a support structure (39) fixed to said piston (11, 11'), a ring (33) having chamfered edges to ease the engagement with the femal mould (20), and a water intake fitting (37) for introducing cooling water into said structure.

6. Apparatus as claimed in claim 5, further comprising an air intake fitting (38) connected to said support structure (39) of the male mould (19), for introducing compressed air therein so as to guarantee a uniform cooling of the compression surface (34).

7. Apparatus as claimed in claims 4 to 6, in which said female mould (20) is carried by a support structure (22) having a cavity (25) therein and a heat source housed in said cavity to maintain the glass cast into the mould at the softening temperature.

8. Apparatus as claimed in any one of the preceding claims 4 to 7, in which said rotatable platform (8) supporting the female forming moulds (20) follows a rotatory movement on a horizontal plane to transport said female forming moulds (20) through stations for casting, first pressing, second pressing, quality control, release, cleaning and application of releasing agent.

9. Apparatus as claimed in any one of the preceding claims 4 to 8, in which said forming male (19) and female (20) moulds are manufactured in stainless steel.

## Patentansprüche

1. Verfahren zur Herstellung eines Spiegels mit prismatischer Form, besonders zur Verwendung als Rückspiegel in Kraftfahrzeugen, das die Schmelzung eines Glasanteils zum Formen eines Spiegels, Guß des Glases in eine Form (20), Formen des Glases, Vergüten des Glases und Auftragen eines reflektierenden Belages, vorsieht, dadurch gekennzeichnet, daß das Glas in eine matrizenartige Form (20) mit einer offenen Vertiefung (27) gegossen wird und der Formvorgang aus zwei, einer auf den anderen folgenden Preßschritten besteht, wobei in beiden eine patrizenartige Form (19) mit einer vollkommen ebenmäßigen Preßoberfläche (34) auf den Glasguß in der offenen Vertiefung (27) gepreßt wird, um die Gefahren einer Aufwärtswölbung des im ersten Schritt gepreßten Glases zu vermindern.

2. Verfahren nach Anspruch 1, in dem die, das Glas in der offenen Vertiefung (27) enthaltende matrizenartige Form (20) von einer ersten Station zu einer zweiten Station transportiert wird, um die aufeinanderfolgenden Preßschritte des Formvorganges in den Stationen durchzuführen.

3. Verfahren nach Anspruch 1 oder 2, in dem die matrizenartige Form (20), vor dem Guß, auf ihrer Innenseite mit einem geeigneten Trennmittel behandelt wird, um den Trennvorgang des gepreßten Glases von der Innenseite der matrizenartigen Form zu erleichtern.

4. Vorrichtung zur Herstellung eines Spiegels mit prismatischer Form, besoders zur Verwendung als Rückspiegel in Kraftfahrzeugen, bestehend aus einem Trichter (1) für die Sammlung einer zu Glas werdenden Mischung, einem Schmelzofen (3) zur Schmelzung der Mischung, einer drehbaren Plattform (8) für die Beförderung der, die geschmolzene Mischung erhaltenden Formen (20) durch aufeinanderfolgende Stationen, dadurch gekennzeichnet, daß die von der Plattform (8) beförderten Formen (20) matrizenartige Formen mit einer offenen Vertiefung (27) sind, und die Formstation aus: einem Paar von patrizenartigen Formen (19) mit einer vollkommen ebenmäßigen Preßoberfläche (34), die nacheinander mit der offenen Vertiefung der matrizenartigen Form (20) verbunden werden, um die darin enthaltene, zu Glas werdende Mischung zu pressen; einem Paar von Kolben (11, 11') zur Senkung der patrizenartigen Formen (19) in Richtung der matrizenartigen Form (20); einer Vorrichtung (5), die mit Armen (10, 10'), die die Kolben (11, 11') tragen, versehen ist; und aus unter der drehbaren Plattform (8), in Übereinstimmung mit den Axen der Kolben (11, 11'), angebrachten hydraulischen Zylindern (17, 17'), um dem Druck der Kolben (11, 11') auf die drehbare Plattform (8) entgegenzuwirken, besteht.

5. Vorrichtung nach Anspruch 4, worin die patrizenartige Form (19) von einer am Kolben (11, 11') befestigten Stützstruktur (39) getragen wird, und einen Ring (33) mit abgeschrägten Ränden, um die Verbindung mit der matrizenartigen Form (20) zu erleichtern, und einen Wassereinlaßanschluß (37) zum Einleiten des Kühlwassers in die Struktur, enthält.

6. Vorrichtung nach Anspruch 5, die weiterhin einen Lufteinlaßanschluß (38), in Verbindung mit der Stützstruktur (39) der patrizenartigen Form (19), enthält, um Druckluft dort hinein zu leiten, die dazu dient eine gleichmäßige Kühlung der Druckfläche (34) zu versichern.

7. Vorrichtung nach den Ansprüchen 4 bis 6, worin die matrizenartige Form (20) von einer, eine Vertiefung (25) enthaltende Stützstruktur (22) getragen wird, wobei in der Vertiefung eine Hitzequelle angebracht ist, um den Glasguß in der Form bei weichhaltender Temperatur erhält.

8. Vorrichtung nach einem der Ansprüche 4 bis 7, worin die, die matrizenartigen Formen (20)tragende, drehbare Plattform (8), einer drehenden Bewegung auf einer waagerechten Ebene folgt, um die matrizenartigen Formen (20) durch Stationen für Guß, ersten Preßschritt, zweiten Preßschritt, Qualitätskontrolle, Trennung, Säuberung und Auftragung des Trennmittels, zu befördern.

9. Vorrichtung nach einem der Ansprüche 4 bis 8, worin die patrizenartigen Formen (19) und die matrizenartigen Formen aus Edelstahl angefertigt sind.

## Revendications

1. Procédé pour la fabrication d'un miroir de forme prismatique, utilisable en particulier en tant que un miroir rétroviseur dans un véhicule à moteur, comprenant les opérations de fondre une certaine quantité de verre pour former un miroir, couler le verre dans un moule (20), mouler le verre, recuire le verre, et appliquer au verre un enduit réfléchissant, caractérisé en ce que
le dit verre est coulé dans un moule femelle (20) ayant une cavité ouverte (27) et la dite opération de moulage comprend deux étapes de pressage effectuées en succession l'une après l'autre, dans chacune des quelles un moule mâle (19) ayant une surface de pressage (34) parfaitement plane est pressé sur le verre coulé dans la dite cavité ouverte (27) de façon à réduire le risque de incurver vers le haut le verre pressé dans la première des dites étapes.

2. Procédé selon la revendication 1, où le dit moule femelle (20) avec le verre coulé dans la dite cavité ouverte (27) est transporté d'une première station à une seconde station pour effectuer dans les dites stations les dits successives étapes de l'opération de moulage.

3. Procédé selon la revendication 1 ou 2, où avant de couler, le moule de moulage (20) est traité sur sa surface intérieure avec un agent approprié de démoulage apte à faciliter l'opération de démoulage du verre pressé de la surface intérieure du moule.

4. Appareil pour la fabrication d'un miroir de forme prismatique, utilisable en particulier en tant que un miroir rétroviseur dans un véhicule à moteur comprenant une trémie (1) pour recevoir le mélange vitrifiable, un four de fusion (3) pour fondre le dit mélange, une plateforme tournante (8) pour transporter le moule (20) qui reçoive le dit mélange fondu à travers des stations successives, caractérisé en ce que les dits moules (20) transportés par la plateforme (8) sont des moules femelle ayant une cavité ouverte (27) et la dite station de moulage comprend:
une paire de moules mâles (19) ayant une surface de pressage (34) parfaitement plane qui doivent être engagés successivement avec la dite cavité ouverte du dit moule femelle (20) pour y presser le mélange vitrifiable; une paire de pistons (11, 11') pour baisser le dit moule mâle (19) vers les dits moules femelles (20); un dispositif (5) pourvu de bras (10, 10') qui supportent les dits pistons (11, 11'); et des cylindres hydrauliques (17, 17') placés au-dessus de la dite plateforme tournante (8) en correspondance des axes des dits pistons (11, 11'), pour faire resistance à la pression des dits pistons (11, 11') sur la plateforme tournante (8).

5. Appareil selon la revendication 4, où le dit moule mâle (19) est porté par une structure de support (39) fixé aux dits pistons (11, 11'), et comprend un anneau (33) ayant des bords chamfreinés pour faciliter l'engagement du moule femelle (20), et un raccord de prise d'eau (37) pour introduire de l'eau de refroidissement dans la dite structure.

6. Appareil selon la revendication 5, comprenant aussi un raccord (38) de prise d'air connecté à la dite structure de support (39) du moule mâle (19) pour y introduire de l'air comprimé de façon à garantir un refroidissement uniforme de la surface de compression (34).

7. Appareil selon l'une quelquonque des revendications 4 à 6, où le dit moule femelle (20) est transporté par une structure de support (22) ayant une cavité (25) et une source de chaleur placée dans la dite cavité pour maintenir le verre coulé dans le moule à la température de rammollissement.

8. Appareil selon l'une quelquonque des précédentes revendications 4 à 7, où la dite plateforme tournante (8) qui supporte le moule femelle (20) de moulage suit un movement rotatif sur un plan horizontal pour transporter le dit moule femelle de moulage (20) à travers des stations pour couler, presser pour la première fois, presser pour la seconde fois, contrôler la cavité, démouler, nettoyer et appliquer l'agent de démoulage.

9. Appareil selon l'une quelquonque des précédentes revendications 4 à 8, où les dits moules mâle (19) et femelle (20) de moulage sont faits en acier inoxydable.
